# EUROPEAN PATENT APPLICATION

(11) **EP 3 056 670 A1**
(43) Date of publication of application: **17.08.2016**
(21) Application number: 15199495.1
(22) Date of filing: 11.12.2015
(51) Int. Cl.: F01D 5/18, F01D 9/06, F01D 25/12

(54) **TURBOMACHINE COMPONENT HAVING COOLING CHANNELS WITH ANGLED PEDESTALS**

(30) Priority: 11.02.2015 US 201514619582
(71) Applicant: United Technologies Corporation, Farmington, CT 06032 (US)
(72) Inventor: KING, Christopher, Bristol, CT Connecticut 06010 (US); QUACH, San, East Hartford, CT Connecticut 06108 (US)
(74) Representative: Hall, Matthew Benjamin

(57) **Abstract**

A turbomachine component (200; 300; 400; 500; 600; 700) includes a body defining a cooling inlet (202a) and a cooling outlet (202b) in fluid communication with each other through a cooling channel (201; 301; 401; 501; 601; 701) that defines a longitudinal axis (A), and at least one pedestal (203; 303; 403; 503; 603; 703) disposed within the cooling channel. The pedestal is angled within the cooling channel relative to the longitudinal axis. The turbomachine component can be a vane, a blade, a blade outer air seal, or a combustor panel. Corresponding turbomachine and method of forming a turbomachine component are also provided.

## Description

### BACKGROUND

### 1. Field

The present disclosure relates to cooling systems, more specifically to pedestals disposed within cooling channels (e.g., within turbomachine components).

### 2. Description of Related Art

Certain cooling channels can include pedestals stretching into or across the channel perpendicular to the flow path. The pedestals provide additional surface area and increase heat transfer in the cooling channels.

Such conventional methods and systems have generally been considered satisfactory for their intended purpose. However, there is still a need in the art for improved cooling systems. The present disclosure provides a solution for this need.

### SUMMARY

A turbomachine component includes a body defining a cooling inlet and a cooling outlet in fluid communication with each other through a cooling channel that defines a longitudinal axis, and at least one pedestal disposed within the cooling channel. The pedestal is angled within the cooling channel relative to the longitudinal axis. The turbomachine component can be a vane, a blade, a blade outer air seal, a combustor panel, or any other suitable component. The at least one pedestal can be angled between about 10 degrees to about 90 degrees relative to the longitudinal axis, or to any other suitable angle.

The pedestal can be angled tangentially circumferential within the cooling channel relative to an axial direction that is parallel to the longitudinal axis. The pedestal can be angled radially within the cooling channel relative to an axial direction that is perpendicular to the longitudinal axis. The pedestal can also be angled tangentially circumferentially and radially within the cooling channel simultaneously. The pedestal can include a circular, elliptical, or square cross-sectional shape, or any other suitable shape.

The pedestal can include a plurality of pedestals that are angled within the cooling channel relative to the longitudinal axis. At least two pedestals in the plurality of pedestals can have a different angle degree and/or angle direction relative to each other.

The plurality of pedestals can be disposed in a predetermined pattern. The predetermined pattern can include one or more rows or columns.

In at least one aspect of this disclosure, a method includes forming a turbomachine component having a body defining a cooling inlet and a cooling outlet in fluid communication with each other through a cooling channel that defines a longitudinal axis, wherein at least one pedestal is disposed within the cooling channel, wherein the pedestal is angled within the cooling channel relative to the longitudinal axis. Forming can include shaping the body into a turbomachine blade including an airfoil. Forming can include at least one of additively manufacturing the turbomachine component, using electric discharge machining (EDM) to manufacture the turbomachine component, or using a laser to manufacture the turbomachine component to produce, e.g., a negative of the airfoil.

In at least one aspect of this disclosure, a turbomachine includes a turbomachine component as described above.

In one embodiment, a turbomachine component is provided. The turbomachine component having: a body defining a cooling inlet and a cooling outlet in fluid communication with each other through a cooling channel that defines a longitudinal axis; and at least one pedestal disposed within the cooling channel, wherein the pedestal is angled within the cooling channel relative to the longitudinal axis.

In addition to one or more features described above, or as an alternative to any of the foregoing embodiments, the at least one pedestal is angled between about 10 degrees to about 90 degrees relative to the longitudinal axis.

In addition to one or more features described above, or as an alternative to any of the foregoing embodiments, the turbomachine component is a vane, a blade, a blade outer air seal, or a combustor panel.

In addition to one or more features described above, or as an alternative to any of the foregoing embodiments, the pedestal is angled tangentially circumferential within the cooling channel relative to an axial direction that is parallel to the longitudinal axis.

In addition to one or more features described above, or as an alternative to any of the foregoing embodiments, the pedestal is angled radially within the cooling channel relative to an axial direction that is perpendicular to the longitudinal axis.

In addition to one or more features described above, or as an alternative to any of the foregoing embodiments, the pedestal is also angled tangentially circumferential within the cooling channel relative to an axial direction that is parallel to the longitudinal axis.

In addition to one or more features described above, or as an alternative to any of the foregoing embodiments, the pedestal includes a circular, elliptical, or square cross-sectional shape.

In addition to one or more features described above, or as an alternative to any of the foregoing embodiments, further embodiments include a plurality of pedestals that are angled relative to one another.

In addition to one or more features described above, or as an alternative to any of the foregoing embodiments, at least two pedestals in the plurality of pedestals have a different angle degree and/or angle direction relative to each other.

In addition to one or more features described above, or as an alternative to any of the foregoing embodiments, the plurality of pedestals are disposed in a predetermined pattern relative to each other.

In addition to one or more features described above, or as an alternative to any of the foregoing embodiments, the predetermined pattern includes one or more rows or columns.

In another embodiment, a method is provided. The method including the steps of: forming a turbomachine component having a body defining a cooling inlet and a cooling outlet in fluid communication with each other through a cooling channel that defines a longitudinal axis, wherein at least one pedestal is disposed within the cooling channel, wherein the pedestal is angled within the cooling channel relative to the longitudinal axis.

In addition to one or more features described above, or as an alternative to any of the foregoing embodiments, forming includes at least one of additively manufacturing the turbomachine component, using electric discharge machining (EDM) to manufacture the turbomachine component, or using a laser to manufacture the turbomachine component.

In addition to one or more features described above, or as an alternative to any of the foregoing embodiments, forming includes shaping the body into a turbomachine vane, blade, blade outer air seal, or combustor panel.

In yet another embodiment, a turbomachine is provided. The turbomachine having: a turbomachine component, having: a body defining a cooling inlet and a cooling outlet in fluid communication with each other through a cooling channel that defines a longitudinal axis; and at least one pedestal disposed within the cooling channel, wherein the pedestal is angled within the cooling channel relative to the longitudinal axis.

In addition to one or more features described above, or as an alternative to any of the foregoing embodiments, the at least one pedestal is angled between about 10 degrees to about 90 degrees relative to the longitudinal axis.

In addition to one or more features described above, or as an alternative to any of the foregoing embodiments, the turbomachine component is a vane, a blade, a blade outer air seal, or a combustor panel.

In addition to one or more features described above, or as an alternative to any of the foregoing embodiments, the pedestal is angled tangentially circumferential within the cooling channel relative to an axial direction that is parallel to the longitudinal axis.

In addition to one or more features described above, or as an alternative to any of the foregoing embodiments, the pedestal is angled radially within the cooling channel relative to an axial direction that is perpendicular to the longitudinal axis.

In addition to one or more features described above, or as an alternative to any of the foregoing embodiments, the pedestal is also angled tangentially circumferential within the cooling channel relative to an axial direction that is parallel to the longitudinal axis.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, exemplary embodiments thereof will be described in detail herein below with reference to certain figures, wherein:
Fig. 1 is a schematic, partial cross-sectional view of a turbomachine in accordance with this disclosure;
Fig. 2A is a cross-sectional end view of an exemplary embodiment of a turbomachine component in accordance with this disclosure, shown with pedestals disposed in a cooling channel thereof that are angled relative to an axis A of the turbomachine such the pedestals diverge from axis A;
Fig. 2B is a partial cross-sectional view of the turbomachine component of Fig. 2A taken along line 2B-2B, showing the pedestals not angled in a radial direction of the turbomachine;
Fig. 2C is a partial cross-sectional view of the turbomachine component of Fig. 2A taken along line 2C-2C, showing the pedestals angled only circumferentially tangential relative to the turbomachine axis A;
Fig. 3A is a cross-sectional elevation view of an exemplary embodiment of a turbomachine component in accordance with this disclosure, shown with pedestals disposed in a cooling channel thereof that are angled relative to axis A of the turbomachine opposite to that of the exemplary embodiment of Fig. 2A such the pedestals converge toward axis A;
Fig. 3B is a partial cross-sectional view of the turbomachine component of Fig. 3A taken along line 3B-3B, showing the pedestals not angled in a radial direction of the turbomachine;
Fig. 3C is a partial cross-sectional view of the turbomachine component of Fig. 3A taken along line 3C-3C, showing the pedestals angled only circumferentially tangential relative to the turbomachine axis A;
Fig. 4A is a cross-sectional elevation view of an exemplary embodiment of a turbomachine component in accordance with this disclosure, shown with pedestals disposed in a cooling channel thereof that are not angled in the axial direction of axis A, i.e., the pedestals do not converge or diverge relative to axis A of turbomachine;
Fig. 4B is a partial cross-sectional view of the turbomachine component of Fig. 4A taken along line 4B-4B, showing the pedestals angled in the radial direction of the turbomachine;
Fig. 4C is a partial cross-sectional view of the turbomachine component of Fig. 4A taken along line 4C-4C, showing the pedestals angled in only the radial direction;
Fig. 5A is a cross-sectional elevation view of an exemplary embodiment of a turbomachine component in accordance with this disclosure, shown with pedestals disposed in a cooling channel thereof that are not angled in the axial direction of axis A, i.e., the pedestals do not converge or diverge relative to axis A of turbomachine;
Fig. 5B is a partial cross-sectional view of the turbomachine component of Fig. 5A taken along line 5B-5B, showing the pedestals angled in the radial direction of the turbomachine;
Fig. 5C is a partial cross-sectional view of the turbomachine component of Fig. 5A taken along line 5C-5C, showing the pedestals angled in only the radial direction opposite to that of the embodiment of Fig. 4A;
Fig. 6A is a cross-sectional elevation view of an exemplary embodiment of a turbomachine component in accordance with this disclosure, shown with pedestals disposed in a cooling channel thereof that are angled relative to both an axial and radial direction of the turbomachine, i.e., circumferentially tangential and radially angled;
Fig. 6B is a partial cross-sectional view of the turbomachine component of Fig. 6A taken along line 6B-6B, showing the pedestals angled in the radial direction of the turbomachine;
Fig. 6C is a partial cross-sectional view of the turbomachine component of Fig. 6A taken along line 6C-6C, showing the pedestals angled in both the axial and radial directions;
Fig. 7A is a cross-sectional elevation view of an exemplary embodiment of a turbomachine component in accordance with this disclosure, shown with pedestals disposed in a cooling channel thereof that are angled relative to both an axial and radial direction of the turbomachine, i.e., circumferentially tangential and radially angled;
Fig. 7B is a partial cross-sectional view of the turbomachine component of Fig. 7A taken along line 7B-7B, showing the pedestals angled in the radial direction of the turbomachine; and
Fig. 7C is a partial cross-sectional view of the turbomachine component of Fig. 7A taken along line 7C-7C, showing the pedestals angled in both the axial and radial directions.

### DETAILED DESCRIPTION

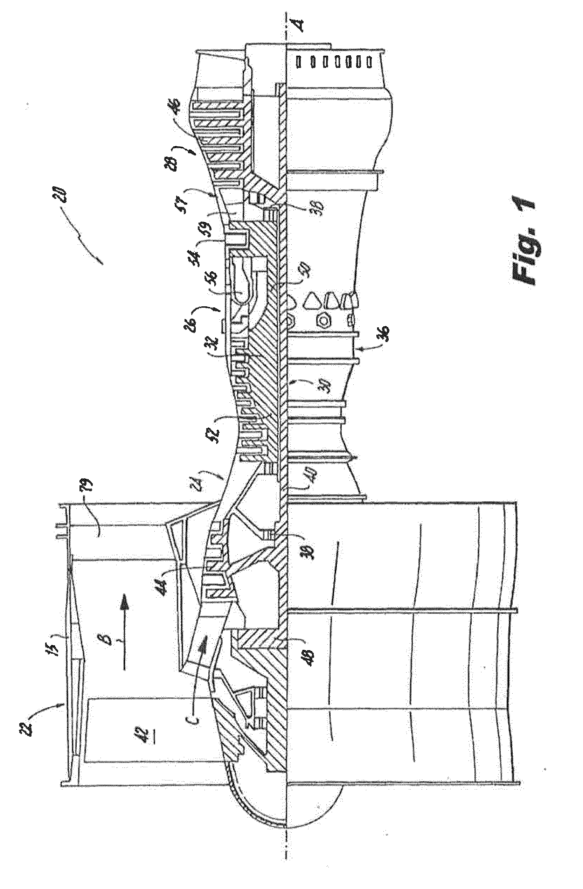

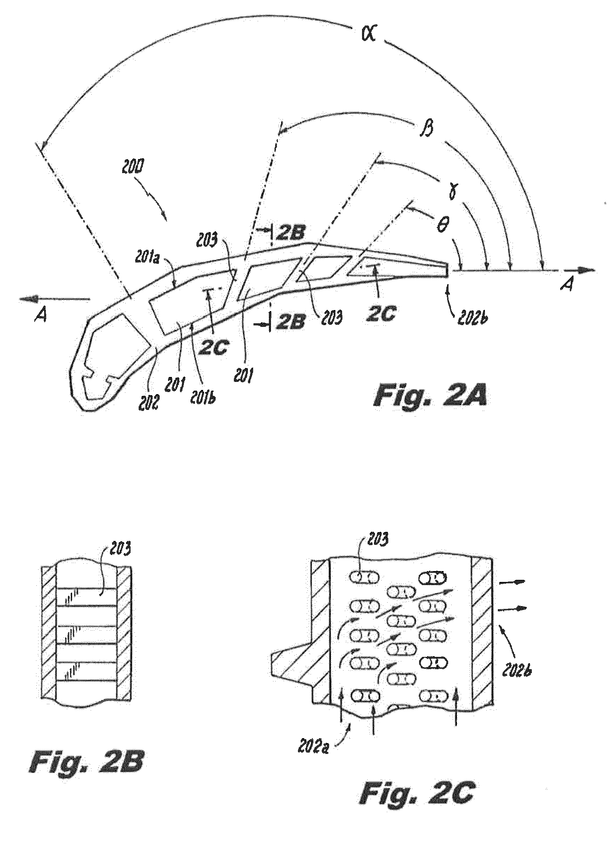

Reference will now be made to the drawings wherein like reference numerals identify similar structural features or aspects of the subject disclosure. For purposes of explanation and illustration, and not limitation, an illustrative view of an exemplary embodiment of a turbomachine blade in accordance with the disclosure is shown in Fig. 2 and is designated generally by reference character 200. Other exemplary embodiments and/or aspects of this disclosure are shown in Figs. 1 and 2B-7C. The systems and methods described herein can be used to enhance thermal transfer within components that have cooling channels.

Fig. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a gear system 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture is an epicyclic gear train, such as a planetary gear system or other gear system, with a gear reduction ratio of greater than about 2.3 and the low pressure turbine 46 has a pressure ratio that is greater than about five. In one disclosed exemplary embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane 79("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5. The "Low corrected fan tip speed" as disclosed herein according to one non-limiting embodiment is less than about 1150 ft / second (350.5 meters/second).

Referring to Figs. 2A-2C, a turbomachine component 200 includes a body 202 defining a cooling inlet 202a (Fig. 2C) and a cooling outlet 202b in fluid communication with each other through a cooling channel 201 that defines a longitudinal axis, and one or more pedestals 203 disposed within the cooling channel 201. One or more of the pedestals 203 are angled within the cooling channel 201 relative to the longitudinal axis. Another way to describe the angle of the pedestals 203 is that the pedestals 203 or a portion thereof can meet one or both of the interior walls 201a, 201b that define the cooling channel 201 at a non-right angle. The pedestals 203 can be angled to any suitable angle degree (e.g., about 10 degrees to about 90 degrees).

As shown in Fig. 2C, the pedestals 203 can include a circular cross-sectional shape, however, it is contemplated that any suitable cross-sectional shape (constant or variable) or combinations thereof can be used. For example, one or more of the pedestals 203 can include an elliptical, square, or other suitable cross-sectional shape and may have any suitable thickness or changing thickness along the length of the pedestals 203.

The turbomachine component 200 can be a blade or vane including an airfoil or any other suitable component with cooling channels (e.g., a blade outer air seal, a combustor panel). As shown, the pedestals 203 can be angled within the cooling channel 201 relative to an axial direction (axis A) of a turbomachine (e.g., circumferentially tangential). Referring to Fig. 2B and 2C, the pedestals can be non-angled or perpendicular relative to a radial direction (e.g., longitudinal direction of the cooling channel 201) of the turbomachine, but can be angled with a forward-slash sweep such that the pedestals 203 diverge relative to axis A.

As shown, the turbomachine component 200 can include a plurality of pedestals 203 where at least two pedestals 203 in the plurality of pedestals 203 have a different angle degree and/or angle direction relative to each other. For example, as shown in Fig. 2A, the pedestals 203 can have differing angles (e.g., angles 0, γ, α, and β) relative to the axis A. This can be due to a non-linear cooling channel 201 formed by the shape of the airfoil cross-section. Also as shown in Fig. 2C, the plurality of pedestals 203 can be disposed in any suitable predetermined pattern. For example, the predetermined pattern can include one or more rows or columns of pedestals 203.

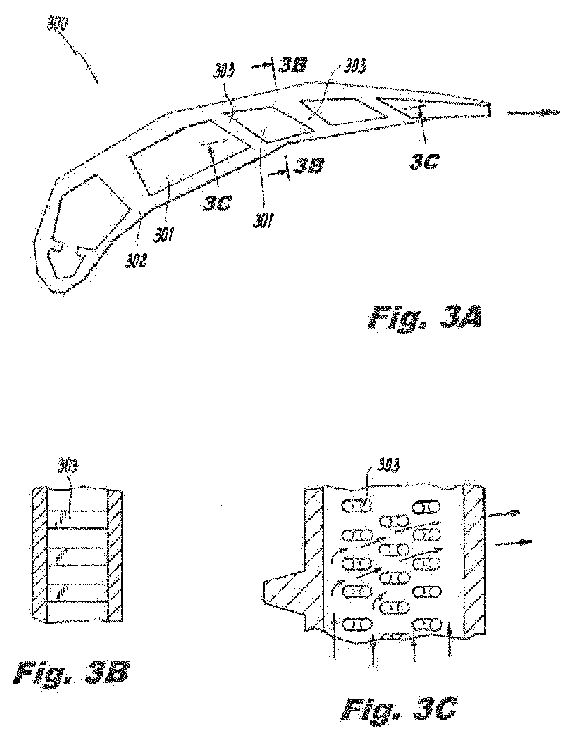

Referring to Figs. 3A-3C, a turbomachine component 300 similar to component 200 can include a body 302 and pedestals 303 that are angled within the cooling channel 301 in a direction opposite to that of the embodiment of Figs. 2A-2C, e.g., such that the pedestals are circumferentially tangentially angled to converge relative to the axis A.

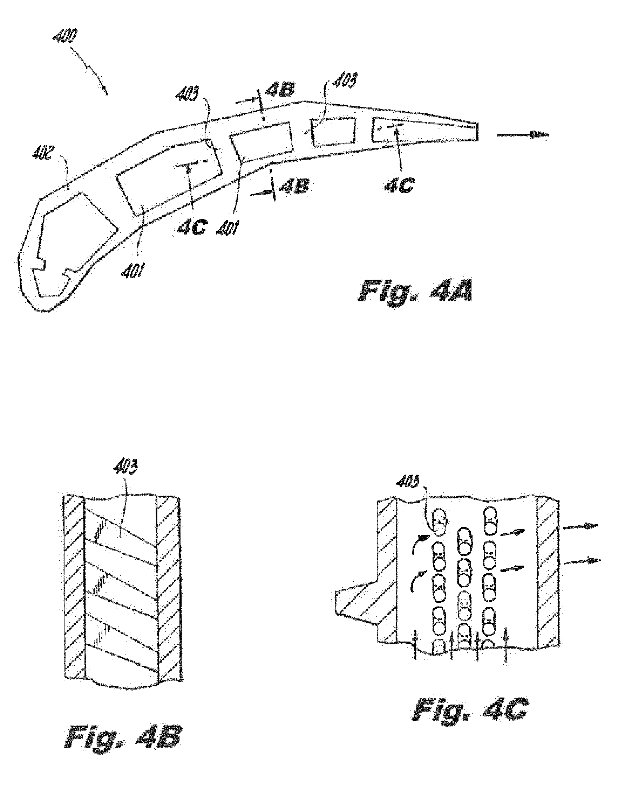

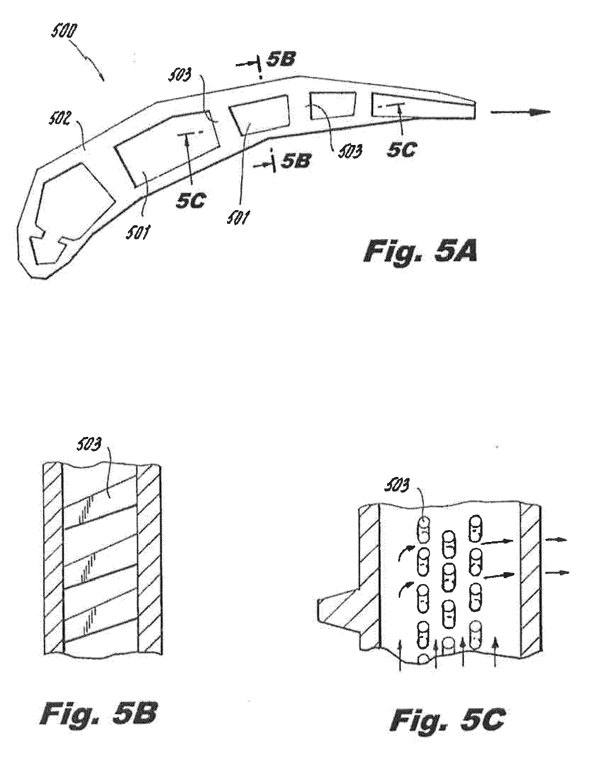

In certain exemplary embodiments, as shown in Fig. 4A-4C, a turbomachine component 400 can include a body 402 having pedestals 403 disposed in a cooling channel 401 that are angled relative to a radial direction of a turbomachine. As shown in Fig. 4B, the pedestals 403 can be angled radially outward to radially inward. Referring to Figs. 5A-5C, a turbomachine component 500 similar to component 400 can include a body 502 and pedestals 503 that are angled within the cooling channel 501 in a radial direction opposite to that of the exemplary embodiment of Figs. 4A-4C.

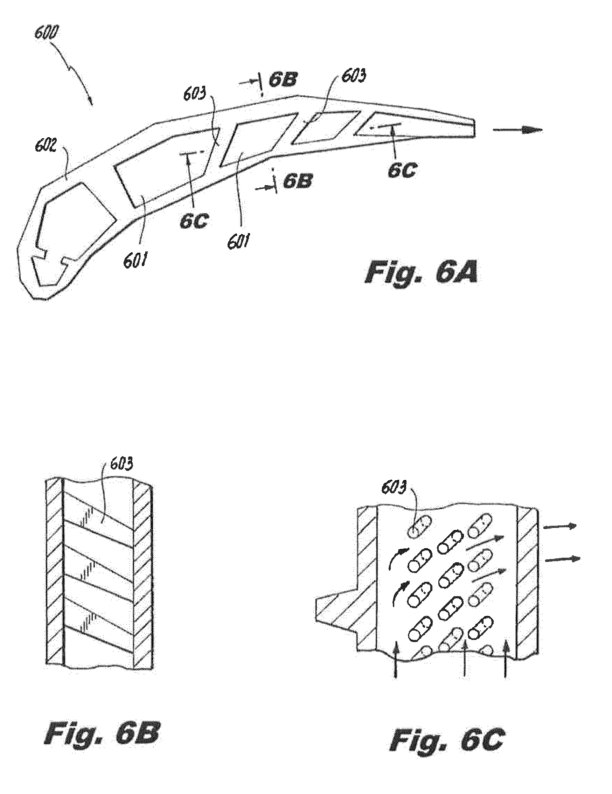

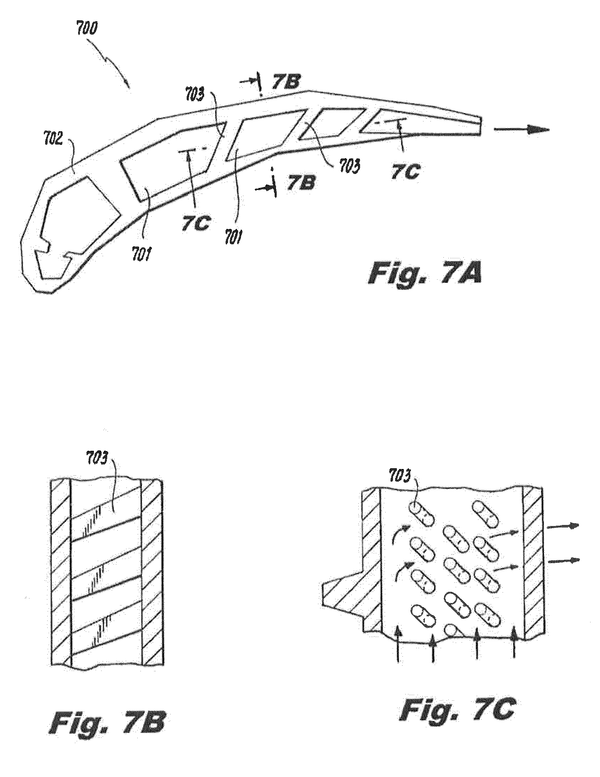

In certain exemplary embodiments, as shown in Fig. 6A-6C, a turbomachine component 600 can include a body 602 having pedestals 603 disposed in a cooling channel 601 that are angled within the cooling channel 601 relative to both an axial direction and a radial direction of a turbomachine. Referring to Figs. 7A-7C, a turbomachine component 700 similar to component 600 can include a body 702 and pedestals 703 that are angled within the cooling channel 701 in an axial and/or radial direction that is different to that of the exemplary embodiment of Figs. 6A-6C.

In at least one aspect of this disclosure, a method includes forming a turbomachine component (e.g., component 200) as described above. Forming can include additively manufacturing the turbomachine component 200. Forming can include shaping or otherwise forming the body 202 into a turbomachine blade including an airfoil. Other methods of manufacturing include conventional casting methods including electric discharge machining (EDM) or Laser of the core structure used to produce the negative of the airfoil.

The angled pedestals of any of the exemplary embodiments described herein allow for flow directional control and/or modification to enhance thermal control of components with cooling channels. For example, the angled pedestals 203 as shown in Figs. 2A-2C can guide a forward-to-aft flow upward toward an upper surface defining the cooling channel. As will be appreciated by one having ordinary skill in the art, the direction and degree of angle of the pedestals can be selected to modify impingement on a desired portion of the cooling channel to regulate temperatures at certain portions of the turbomachine component as desired.

The methods and systems of the present disclosure, as described above and shown in the drawings, provide for enhanced components with cooling channels having superior properties including enhanced thermal efficiency. While the apparatus and methods of the subject disclosure have been shown and described with reference to exemplary embodiments, those skilled in the art will readily appreciate that changes and/or modifications may be made thereto without departing from the scope of the subject disclosure.

The following clauses set out features of the invention which may or may not be presently be claimed but which may form the basis for future amendments and/or a divisional application.
1. A turbomachine component, comprising:
   a body defining a cooling inlet and a cooling outlet in fluid communication with each other through a cooling channel that defines a longitudinal axis; and
   at least one pedestal disposed within the cooling channel, wherein the pedestal is angled within the cooling channel relative to the longitudinal axis.
2. The turbomachine of clause 1, wherein the at least one pedestal is angled between about 10 degrees to about 90 degrees relative to the longitudinal axis.
3. The turbomachine component of clause 1, wherein the turbomachine component is a vane, a blade, a blade outer air seal, or a combustor panel.
4. The turbomachine component of clause 1, wherein the pedestal is angled tangentially circumferential within the cooling channel relative to an axial direction that is parallel to the longitudinal axis.
5. The turbomachine component of clause 1, wherein the pedestal is angled radially within the cooling channel relative to an axial direction that is perpendicular to the longitudinal axis.
6. The turbomachine component of clause 5, wherein the pedestal is also angled tangentially circumferential within the cooling channel relative to an axial direction that is parallel to the longitudinal axis.
7. The turbomachine component of clause 2, wherein the pedestal includes a circular, elliptical, or square cross-sectional shape.
8. The turbomachine component of clause 2, further comprising a plurality of pedestals that are angled relative to one another.
9. The turbomachine component of clause 8, wherein at least two pedestals in the plurality of pedestals have a different angle degree and/or angle direction relative to each other.
10. The turbomachine component of clause 8, wherein the plurality of pedestals are disposed in a predetermined pattern relative to each other.
11. The turbomachine component of clause 10, wherein the predetermined pattern includes one or more rows or columns.
12. A method, comprising:
   forming a turbomachine component having a body defining a cooling inlet and a cooling outlet in fluid communication with each other through a cooling channel that defines a longitudinal axis, wherein at least one pedestal is disposed within the cooling channel, wherein the pedestal is angled within the cooling channel relative to the longitudinal axis.
13. The method of clause 12, wherein forming includes at least one of additively manufacturing the turbomachine component, using electric discharge machining (EDM) to manufacture the turbomachine component, or using a laser to manufacture the turbomachine component.
14. The method of clause 13, wherein forming includes shaping the body into a turbomachine vane, blade, blade outer air seal, or combustor panel.
15. A turbomachine, comprising:
   a turbomachine component, having:
      a body defining a cooling inlet and a cooling outlet in fluid communication with each other through a cooling channel that defines a longitudinal axis; and
      at least one pedestal disposed within the cooling channel, wherein the pedestal is angled within the cooling channel relative to the longitudinal axis.
16. The turbomachine of clause 15, wherein the at least one pedestal is angled between about 10 degrees to about 90 degrees relative to the longitudinal axis.
17. The turbomachine of clause 15, wherein the turbomachine component is a vane, a blade, a blade outer air seal, or a combustor panel.
18. The turbomachine of clause 15, wherein the pedestal is angled tangentially circumferential within the cooling channel relative to an axial direction that is parallel to the longitudinal axis.
19. The turbomachine of clause 15, wherein the pedestal is angled radially within the cooling channel relative to an axial direction that is perpendicular to the longitudinal axis.
20. The turbomachine of clause 19, wherein the pedestal is also angled tangentially circumferential within the cooling channel relative to an axial direction that is parallel to the longitudinal axis.

## Claims

1. A turbomachine component (200; 300; 400; 500; 600; 700), comprising:
a body defining a cooling inlet (202a) and a cooling outlet (202b) in fluid communication with each other through a cooling channel (201; 301; 401; 501; 601; 701) that defines a longitudinal axis (A); and
at least one pedestal (203; 303; 403; 503; 603; 703) disposed within the cooling channel, wherein the pedestal is angled within the cooling channel relative to the longitudinal axis.

2. The turbomachine component (200; 300; 400; 500; 600; 700) of claim 1, wherein the at least one pedestal (203; 303; 403; 503; 603; 703) is angled between about 10 degrees to about 90 degrees relative to the longitudinal axis (A).

3. The turbomachine component (200; 300; 400; 500; 600; 700) of claim 1 or 2, wherein the turbomachine component is a vane, a blade, a blade outer air seal, or a combustor panel.

4. The turbomachine component (200; 300) of claim 1, 2 or 3, wherein the pedestal (203; 303) is angled tangentially circumferential within the cooling channel (201; 301) relative to an axial direction that is parallel to the longitudinal axis (A).

5. The turbomachine component (400; 500) of claim 1, 2 or 3, wherein the pedestal (403; 503) is angled radially within the cooling channel (401; 501) relative to an axial direction that is perpendicular to the longitudinal axis (A).

6. The turbomachine component (400; 500) of claim 5, wherein the pedestal (403; 503) is also angled tangentially circumferential within the cooling channel (401; 501) relative to an axial direction that is parallel to the longitudinal axis.

7. The turbomachine component (200; 300; 400; 500; 600; 700) of claim 1 or 2, wherein the pedestal (203; 303; 403; 503; 603; 703) includes a circular, elliptical, or square cross-sectional shape.

8. The turbomachine component (200; 300; 400; 500; 600; 700) of claim 1 or 2, further comprising a plurality of pedestals (203; 303; 403; 503; 603; 703) that are angled relative to one another.

9. The turbomachine component (200; 300; 400; 500; 600; 700) of claim 8, wherein at least two pedestals (203; 303; 403; 503; 603; 703) in the plurality of pedestals have a different angle degree and/or angle direction relative to each other.

10. The turbomachine component (200; 300; 400; 500; 600; 700) of claim 8 or 9, wherein the plurality of pedestals (203; 303; 403; 503; 603; 703) are disposed in a predetermined pattern relative to each other.

11. The turbomachine component (200; 300; 400; 500; 600; 700) of claim 10, wherein the predetermined pattern includes one or more rows or columns.

12. A method, comprising:
forming a turbomachine component (200; 300; 400; 500; 600; 700) having a body defining a cooling inlet (202a) and a cooling outlet (202b) in fluid communication with each other through a cooling channel (201; 301; 401; 501; 601; 701) that defines a longitudinal axis (A), wherein at least one pedestal (203; 303; 403; 503; 603; 703) is disposed within the cooling channel, wherein the pedestal is angled within the cooling channel relative to the longitudinal axis.

13. The method of claim 12, wherein forming includes at least one of additively manufacturing the turbomachine component (200; 300; 400; 500; 600; 700), using electric discharge machining (EDM) to manufacture the turbomachine component, or using a laser to manufacture the turbomachine component.

14. The method of claim 12 or 13, wherein forming includes shaping the body into a turbomachine vane, blade, blade outer air seal, or combustor panel.

15. A turbomachine, comprising:
a turbomachine component (200; 300; 400; 500; 600; 700) as described in any of claims 1 to 11.
